(19) Europäisches Patentamt
European Patent Office
Office européen des brevets

(11) EP 4 572 002 A1

(12) **EUROPEAN PATENT APPLICATION**
published in accordance with Art. 153(4) EPC

(43) Date of publication:
**18.06.2025 Bulletin 2025/25**

(21) Application number: **22962980.3**

(22) Date of filing: **24.10.2022**

(51) International Patent Classification (IPC):
*H01M 50/636* (2021.01)    *H01M 50/645* (2021.01)
*B23K 26/21* (2014.01)

(52) Cooperative Patent Classification (CPC):
**H01M 50/636; B23K 26/206; B23K 26/21;**
**H01M 50/15; H01M 50/169; H01M 50/184;**
**H01M 50/186; H01M 50/191; H01M 50/645;**
B23K 2101/36; H01M 2220/20; Y02E 60/10

(86) International application number:
**PCT/CN2022/127138**

(87) International publication number:
**WO 2024/086992 (02.05.2024 Gazette 2024/18)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Contemporary Amperex Technology**
**(Hong Kong) Limited**
**Hong Kong (HK)**

(72) Inventors:
• **CHEN, Congsheng**
**Ningde, Fujian 352100 (CN)**
• **LIN, Wenfa**
**Ningde, Fujian 352100 (CN)**
• **DING, Yu**
**Ningde, Fujian 352100 (CN)**
• **WEN, Yaoling**
**Ningde, Fujian 352100 (CN)**

(74) Representative: **Kraus & Lederer PartGmbB**
**Thomas-Wimmer-Ring 15**
**80539 München (DE)**

(54) **BATTERY CELL, BATTERY, ELECTRIC APPARATUS, WELDING METHOD, AND DEVICE**

(57) The present disclosure relates to the field of battery technologies, and more particularly, to a battery cell, a battery, an electric apparatus, a welding method, and a welding device. The battery cell includes: an end cover having an injection hole defined thereon; and a seal sealingly connected to the injection hole. A first weld segment and a second weld segment are formed between the seal and the end cover. An annular weld seam of the seal is formed by enclosing with at least a part of the first weld segment and at least a part of the second weld segment together. The first weld segment is formed by continuous laser light. The second weld segment is formed by pulsed laser light. As the present disclosure can combine a high welding rate of the continuous laser light and a high excellent rate of the pulsed laser light, problems of a low welding speed and a low excellent rate during welding for the seal can be avoided, contributing to improving a welding rate and a welding yield rate of the seal.

FIG. 6

# Description

## FIELD

The present disclosure relates to the field of battery technologies, and more particularly, to a battery cell, a battery, an electric apparatus, a welding method, and a welding device.

## BACKGROUND

At present, a seal of a battery cell is usually formed by welding with pulsed laser light or continuous laser light at one time. However, the pulsed laser light has a low welding speed, which limits a production capacity. For the continuous laser light, the inside residual electrolyte forms vapors due to a thermal effect of welding. The vapors are discharged from a finishing spot, leading to a defect of a large number of pores in the finishing spot. Therefore, a welding yield rate of the seal cannot meet requirements.

## SUMMARY

In view of the above problems, the present disclosure provides a battery cell, a battery, an electric apparatus, a welding method, and a welding device, aiming to solve problems of a low welding speed and a low excellent rate in an existing welding process for a seal.

In a first aspect of the present disclosure, a battery cell is provided. The battery cell includes: an end cover having an injection hole defined thereon; and a seal sealingly connected to the injection hole. A first weld segment and a second weld segment are formed between the seal and the end cover. An annular weld seam surrounding the seal is formed by enclosing with at least a part of the first weld segment and at least a part of the second weld segment together. The first weld segment is formed by continuous laser light. The second weld segment being formed by pulsed laser light.

In technical solutions of embodiments of the present disclosure, the first weld segment and the second weld segment are formed between the seal and the end cover. The first weld segment is formed by the continuous laser light emitted by a continuous laser. The second weld segment is formed by the pulsed laser light emitted by a pulsed laser. Therefore, a high welding rate of the continuous laser light and a high excellent rate of the pulsed laser light can be combined to avoid the problems of the low welding speed and the low excellent rate during welding for the seal, contributing to improving a welding rate and a welding yield rate of the seal.

In some embodiments, the second weld segment includes a head, a middle, and a tail that are sequentially connected. The annular weld seam is formed by connecting the middle to the first weld segment.

In the technical solutions of the embodiments of the present disclosure, since laser light at the head and the tail is unstable and laser light at the middle is stable during welding, a welding excellent rate can be improved through forming the annular weld seam by connecting the middle of the second weld segment to the first weld segment.

In some embodiments, the head and the tail are equal in length.

In the technical solutions of the embodiments of the present disclosure, by setting the head and the tail to be equal in length, the head and the tail can be arranged symmetrically to embellish the annular weld seam.

In some embodiments, the head and/or the tail partially overlaps the first weld segment.

In the technical solutions of the embodiments of the present disclosure, by setting the head and/or the tail of the second weld segment to partially overlap the first weld segment, sealing performance of the seal can be improved.

In some embodiments, the middle has a dimension equal to or greater than 1 mm.

In the technical solutions of the embodiments of the present disclosure, by setting the dimension of the middle of the second weld segment to be equal to or greater than 1 mm, a sufficient region can be reserved for discharge of electrolyte vapors to avoid a formation of a defect in the finishing spot.

In some embodiments, a length of the first weld segment in the annular weld seam is greater than a length of the second weld segment in the annular weld seam.

In the technical solutions of the embodiments of the present disclosure, by setting the length of the first weld segment to be greater than the length of the second weld segment, continuous laser light welding can be ensured to be a primary welding method, and pulsed laser light welding can be ensured to be a secondary welding method. Since the continuous laser light welding has a higher welding rate, a welding rate for the seal can be increased.

In some embodiments, a spacing between weld joints of the first weld segment is equal to a spacing between weld joints of the second weld segment.

In the technical solutions of the embodiments of the present disclosure, by setting the spacing between the weld joints of the first weld segment to be equal to the spacing between the weld joints of the second weld segment, a uniform appearance of the annular weld seam can be ensured.

In some embodiments, a diameter of each of weld joints of the first weld segment is equal to a diameter of each of weld joints of the second weld segment.

In the technical solutions of the embodiments of the present disclosure, by setting the diameter of each of the weld joints of the first weld segment to be equal to the diameter of each of the weld joints of the second weld segment, a uniform width of the annular weld seam can be ensured.

In a second aspect of the present disclosure, a battery is provided. The battery includes the battery cell according to the above embodiments.

In a third aspect of the present disclosure, an electric apparatus is provided. The electric apparatus includes the battery according to the above embodiments. The battery is configured to supply electric energy.

In a fourth aspect of the present disclosure, a welding method is provided. The welding method is used for welding a seal to a material. The method includes: controlling, in response to welding the seal, a continuous laser to emit continuous laser light to form a first weld segment of the seal; and controlling a pulsed laser to emit pulsed laser light to form a second weld segment of the seal subsequent to a completion of welding by the continuous laser, an annular weld seam surrounding the seal being formed by enclosing with at least a part of the first weld segment and at least a part of the second weld segment together.

In the technical solutions of the embodiments of the present disclosure, the seal is welded in segments. The annular weld seam of the seal is formed by enclosing with the first weld segment and the second weld segment together. The first weld segment is formed by the continuous laser light emitted by the continuous laser. The second weld segment is formed by the pulsed laser light emitted by the pulsed laser. Therefore, the high welding rate of the continuous laser light and the high excellent rate of the pulsed laser light can be combined to avoid the problems of the low welding speed and the low excellent rate during the welding for the seal, contributing to improving the welding rate and the welding yield rate of the seal.

In some embodiments, the welding method further includes: in response to controlling the continuous laser to emit the continuous laser light to form the first weld segment of the seal, simultaneously controlling the pulsed laser to emit the pulsed laser light to form the second weld segment of an immediately previous seal.

In the technical solutions of the embodiments of the present disclosure, since the pulsed laser can be simultaneously controlled, in response to controlling the continuous laser to emit the continuous laser light to form the first weld segment of the seal, to emit the pulsed laser light to form the second weld segment of the immediately previous seal, a welding speed can be increased.

In some embodiments, a welding duration for the continuous laser to weld the first weld segment of the seal is equal to a welding duration for the pulsed laser to weld the second weld segment of the immediately previous seal, which can avoid material stacking, and increase the welding speed.

In some embodiments, a length of an unwelded region between the seal and the material is greater than or equal to 1 mm, subsequent to the completion of the welding by the continuous laser and prior to welding by the pulsed laser.

In the technical solutions of the embodiments of the present disclosure, by setting the length of the unwelded region between the seal and the material to be greater than or equal to 1 mm, the sufficient region can be reserved for the electrolyte vapors to be discharged, avoiding the formation of the defect in the finishing spot.

In some embodiments, the controlling the pulsed laser to emit the pulsed laser light to form the second weld segment of the seal subsequent to the completion of the welding by the continuous laser includes: controlling, after a predetermined time interval subsequent to the completion of the welding by the continuous laser, the pulsed laser to emit the pulsed laser light to form the second welded segment of the seal.

In the technical solutions of the embodiments of the present disclosure, by setting a time interval between the welding by the continuous laser and the welding by the pulsed laser, a sufficient duration can be reserved for the electrolyte vapors to be discharged, which avoids the formation of the defect in the finishing spot.

In some embodiments, the continuous laser light is modulated continuous laser light, and the pulsed laser light is YAG pulsed laser light.

In the technical solutions of the embodiments of the present disclosure, by setting the continuous laser light as the modulated continuous laser light, an electrolyte contamination tolerance can be increased due to a large spot formed by the modulated continuous laser light. Also, a spot-like appearance formed by the modulated continuous laser light has no difference from an appearance of a weld seam of the subsequent YAG pulsed laser light, which can ensure the uniform appearance of the annular weld seam. In addition, during high-speed welding of the modulated continuous laser light, a pore in the finishing spot is reserved to facilitate the discharge of the electrolyte vapors, avoiding the formation of the defect in the finishing spot. By setting the pulsed laser light as the YAG pulsed laser light, a smooth and beautiful weld seam in the finishing spot can be ensured.

In some embodiments, a ratio of a welding speed of the continuous laser to a welding frequency of the continuous laser is equal to a ratio of a welding speed of the pulsed laser to a welding frequency of the pulsed laser.

In the technical solutions of the embodiments of the present disclosure, by setting the stepping of the continuous laser to be consistent with the stepping of the pulsed laser, the spacing between the weld joints of the first weld segment can be ensured to be equal to the spacing between the weld joints of the second weld segment, which can ensure the uniform appearance of the annular weld seam.

In some embodiments, single point energy emitted by the continuous laser is equal to single point energy emitted by the pulsed laser.

In the technical solutions of the embodiments of the present disclosure, by setting the single point energy emitted by the continuous laser to be equal to the single point energy emitted by the pulsed laser, the diameter of each of the weld joints of the first weld segment can be ensured to be equal to the diameter of each of the weld joints of the second weld segment, ensuring that a width of the first weld segment is consistent with a width of the second weld segment.

In a fifth aspect of the present disclosure, a welding device is provided. The welding device includes: a carrier table configured to hold a seal and a material; and a welding platform disposed in correspondence to the carrier table. A continuous laser and a pulsed laser are disposed on the welding platform. The continuous laser is configured to form a first weld segment between the seal and the material. The pulsed laser is configured to form a second weld segment between the seal and the material. An annular weld seam surrounding the seal is formed by enclosing with at least a part of the first weld segment and at least a part of the second weld segment together.

In the technical solutions of the embodiments of the present disclosure, the continuous laser and the pulsed laser are disposed on the welding platform. The continuous laser is configured to form the first weld segment between the seal and the material. The pulsed laser is configured to form the second weld segment between the seal and the material. The annular weld seam of the seal is formed by enclosing with at least a part of the first weld segment and at least a part of the second weld segment together. Therefore, the high welding rate of the continuous laser light and the high excellent rate of the pulsed laser light can be combined to avoid the problems of the low welding speed and the low excellent rate during the welding for the seal, contributing to improving the welding rate and the welding yield rate of the seal.

In some embodiments, the carrier table is rotatable and is configured to switch between the continuous laser and the pulsed laser for the seal and the material.

In the technical solutions of the embodiments of the present disclosure, by setting the carrier table to be rotatable, the pulsed laser can be ensured to continue to weld subsequent to the completion of the welding by the continuous laser.

The above description is merely an overview of the technical solutions of the present disclosure. To facilitate a clear understanding of technical means of the present disclosure and the implementations of the technical solutions in accordance with the contents of the specification, and to clarify and explain the above and other objects, features, and advantages of the present disclosure, specific embodiments of the present disclosure will be described below.

## BRIEF DESCRIPTION OF THE DRAWINGS

FIG. 1 is a schematic diagram showing a structure of a vehicle according to some embodiments of the present disclosure.

FIG. 2 is an exploded view of a structure of a battery according to some embodiments of the present disclosure.

FIG. 3 is an exploded view of a structure of a battery cell according to some embodiments of the present disclosure.

FIG. 4 is an exploded view of a structure of an end cover according to some embodiments of the present disclosure.

FIG. 5 is a schematic diagram showing a structure of an annular weld seam according to some embodiments of the present disclosure.

FIG. 6 is a schematic diagram showing a structure of a head, a middle, and a tail of a second weld segment according to some embodiments of the present disclosure.

FIG. 7 is a schematic diagram showing a structure of a first welding angle and a second welding angle according to some embodiments of the present disclosure.

FIG. 8 is a flowchart illustrating a welding method according to some embodiments of the present disclosure.

FIG. 9 is a schematic diagram of a welding device for a welding method according to some embodiments of the present disclosure.

Reference numerals in the embodiments are explained as follows:

vehicle 1000;
battery 100, controller 200, motor 300;
case body 10, first portion 11, second portion 12;
battery cell 20, end cover 21, electrode terminal 21a, housing 22, electrode assembly 23, tab 23a;
adhesive nail 31, injection hole 32, accommodation groove 33, seal 40;
first weld segment 50, second weld segment 60;
head 61, middle 62, tail 63;
first welding angle $\theta_1$, second welding angle $\theta_2$;
carrier table 70, welding platform 80, unloading assembly 81, loading assembly 82, laser cleaning assembly 83, nailing assembly 84, pre-welding assembly 85, continuous laser 86, pulsed laser 87, CCD inspection assembly 88.

## DETAILED DESCRIPTION

Embodiments of technical solutions of the present disclosure will be described in detail below with reference to the accompanying drawings. The following embodiments are only used to explain the technical solutions of the present disclosure more clearly, and therefore should be construed as examples only, rather than limitations of the protection scope of the present disclosure.

Unless otherwise defined, all technical and scientific terms used herein have the same meaning as commonly understood by those skilled in the art of the present disclosure. Terms in the present disclosure herein are only used for the purpose of describing specific embodiments, and are not intended to limit the present disclosure. Terms "including", "having", and any variations thereof in the specification, claims, and accompanying drawings of the present disclosure are intended to cover non-exclusive inclusions.

In the description of the embodiments of the present disclosure, the technical terms "first", "second", etc. are used to distinguish different objects, and cannot be understood as indicating or implying relative importance or implicitly specifying a number, a particular order, or a primary or secondary relationship of the indicated technical features. In the description of the embodiments of the present disclosure, "plurality" means at least two, unless otherwise specifically defined.

In the present disclosure, reference to "embodiment" means that a particular feature, structure, or characteristic described in conjunction with the embodiment or implementation may be included in at least one embodiment of the present disclosure. The presence of the term at each place in the specification does not necessarily refer to the same embodiment, nor does it refer to a separate or alternative embodiment that is mutually exclusive of other embodiments. It should be understood by those skilled in the art, both explicitly and implicitly, that the embodiments described herein may be combined with other embodiments.

In the description of the embodiments of the present disclosure, the term "and/or" only represents a relationship between correlated objects, including three relationships. For example, "A and/or B" may mean three situations: A only, B only, or both A and B. In addition, the character "/" in the present disclosure generally represents an "or" relationship between the correlated objects preceding and succeeding the symbol.

In the description of the embodiments of the present disclosure, the term "plurality" refers to more than two (including two). Similarly, "plurality of groups" refers to more than two groups (including two groups), and "plurality of pieces" refers to more than two pieces (including two pieces).

In the description of the embodiments of the present disclosure, the orientation or the position indicated by technical terms such as "center", "longitudinal", "lateral", "length", "width", "thickness", "over", "below", "front", "rear", "left", "right", "vertical", "horizontal", "top", "bottom", "inner", "outer", "clockwise", "anti-clockwise", "axial", "radial", and "circumferential" should be construed to refer to the orientation and the position as shown in the drawings, and is only for the convenience of describing the embodiments of the present disclosure and simplifying the description, rather than indicating or implying that the pointed device or element must have a specific orientation, or be constructed and operated in a specific orientation, and therefore cannot be understood as a limitation on the present disclosure.

In the description of the embodiments of the present disclosure, unless otherwise clearly specified and limited, technical terms such as "install", "connect", "connect to", "fix" and the like should be understood in a broad sense. For example, it may be a fixed connection or a detachable connection or connection as one piece; mechanical connection or electrical connection; direct connection or indirect connection through an intermediate; internal communication of two components or the interaction relationship between two components. For those skilled in the art, the specific meaning of the above-mentioned terms in the embodiments of the present disclosure can be understood according to specific circumstances. The specific embodiments described herein are only used to explain, rather than to limit, the present disclosure.

At present, from the perspective of the development of the market, the application of batteries is more and more extensive. Batteries are not only applied to energy storage power systems such as hydro power stations, thermal power stations, wind power stations, and solar power stations, but also widely applied to electric means of transportation such as electric bicycles, electric motorcycles, and electric vehicles, and fields such as military equipment and aerospace. With a continuous expansion of the application field of batteries, a market demand for the batteries is also increasing.

It was noted that a seal of a battery cell is usually welded by using pulsed laser light or continuous laser light at one time. The pulsed laser light has advantages such as mature process and high excellent rate. However, a low welding speed of the pulsed laser light limits a battery production capacity. In addition, due to a low beat rate of the pulsed laser light, a large number of welding devices are needed to meet a production demand, which leads to a poor consistency of penetration. The continuous laser light has an advantage of high welding speed, but defects such as pinholes/soot are generated easily due to a low tolerance of the continuous laser light to an electrolyte. In addition, for the continuous laser light, due to a thermal effect of welding, the inside residual electrolyte forms vapors that are discharged from a finishing spot, and thus a defect of a large number of pores in the finishing spot is generated, causing a welding excellent rate fail to meet requirements.

To solve problems of a low welding speed and a low excellent rate during sealing for the seal, it was found that the seal of the battery cell may be welded in segments. A first weld segment and a second weld segment are formed between the seal and an end cover. An annular weld seam surrounding the seal is formed by enclosing with at least a part of the first weld segment and at least a part of the second weld segment together. The first weld segment is formed by the continuous laser light. The second weld segment is formed by the pulsed laser light. Therefore, a high welding rate of the continuous laser light and a high excellent rate of the pulsed laser light can be combined to avoid the problems of the low welding speed and the low excellent rate during the welding for the seal, contributing to improving a welding rate and a welding yield rate of the seal.

The battery cell disclosed by the embodiments of the present disclosure can be applied in electric apparatuses that use a battery as a power source or in various energy storage systems that use the battery as an energy storage element. The electric apparatuses may be, but are not limited to, a cell phone, a tablet, a laptop computer, an electric toy, an electric tool, an electric scooter, an electric vehicle, a ship, a spacecraft, and the like. The electric toy may include a fixed electric toy or a mobile electric toy, e.g., a game console, an electric car toy, an electric ship toy, and an electric airplane toy. The spacecraft may include an airplane, a rocket, a space shuttle, a spaceship, or the like.

In the following embodiments, as an example, an electric apparatus according to an embodiment of the present disclosure is described as a vehicle 1000 for convenience of description.

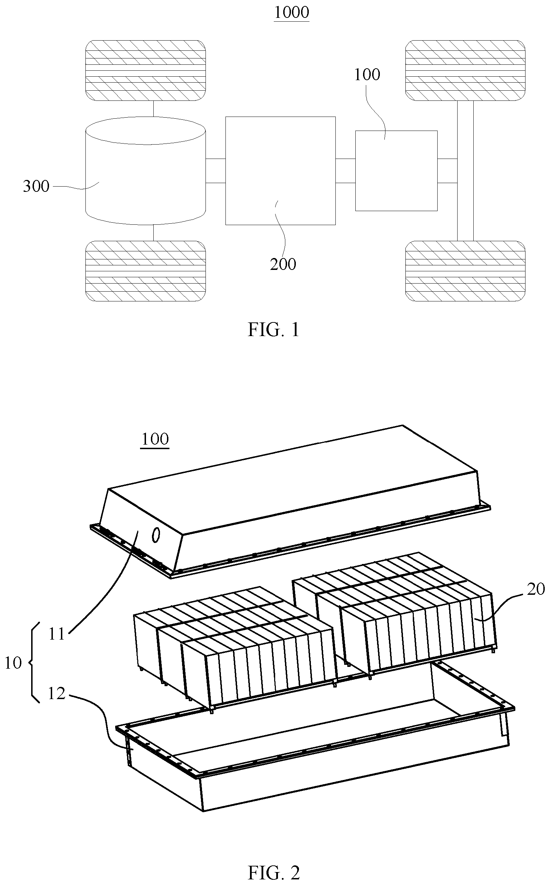

FIG. 1 is a schematic diagram showing a structure of the vehicle 1000 according to some embodiments of the present disclosure. Referring to FIG. 1, the vehicle 1000 may be a fuel vehicle, a gas vehicle, or a new energy vehicle. The new energy vehicle may be a battery electric vehicle, a hybrid electric vehicle, an extended range vehicle, or the like. A battery 100 is disposed in the vehicle 1000, and the battery 100 may be disposed at a bottom or a head or a tail of the vehicle 1000. The battery 100 can be configured to supply power to the vehicle 1000. For example, the battery 100 may be used as an operational power source of the vehicle 1000. The vehicle 1000 may further include a controller 200 and a motor 300. The controller 200 is configured to control the battery 100 to supply power to the motor 300, e.g., for operational power needs in starting, navigation, and traveling of the vehicle 1000.

In some embodiments of the present disclosure, the battery 100 may not only serve as an operational power source of the vehicle 1000, but also serve as a drive power source of the vehicle 1000 in lieu of, or in part in lieu of a fuel oil or a natural gas to provide drive power for the vehicle 1000.

FIG. 2 is an exploded view of the battery 100 according to some embodiments of the present disclosure. Referring to FIG. 2, the battery 100 includes a case body 10 and a battery cell 20 accommodated in the case body 10. The case body 10 provides an accommodation space for the battery cell 20, and may be in various structures. In some embodiments, the case body 10 may include a first portion 11 and a second portion 12 that cap each other. The first portion 11 and the second portion 12 together define the accommodation space for accommodating the battery cell 20. The second portion 12 may be in a hollow structure having an opening at one end thereof while the first portion 11 may be in a plate-like structure. The first portion 11 caps the second portion 12 at the opening side to enable the first portion 11 and the second portion 12 to define the accommodation space. Also, each of the first portion 11 and the second portion 12 may be in the hollow structure having an opening at one end thereof, and the first portion 11 at the opening side caps over the second portion 12 at the opening side. Of course, the case body 10 formed by the first portion 11 and the second portion 12 may be of various shapes, for example, a cylinder, a cuboid, and so on.

In the battery 100, a plurality of battery cells 20 may be provided. The plurality of battery cells 20 may be connected in series or in parallel or in series and parallel. The expression "in series and parallel" means that the plurality of battery cells 20 is connected both in series and in parallel. The plurality of battery cells 20 may be directly connected in series or in parallel or in series and parallel, and then accommodated in the case body 10 as a whole. Of course, for the battery 100, the plurality of battery cells 20 may be connected in series or in parallel or in series and parallel to form a battery module, and then a plurality of battery modules may be connected in series or in parallel or in series and parallel and accommodated in the case body 10 as a whole. The battery 100 may further have other structures. For example, the battery 100 may further include a busbar configured to implement an electrical connection between the plurality of battery cells 20.

Each battery cell 20 may be a rechargeable battery or a primary battery. The battery cell 20 may be a lithium-sulfur battery, a sodium-ion battery, or a magnesium-ion battery. The present disclosure is not limited to any of these examples. The battery cell 20 may be in a shape of a cylinder, a flat body, a cuboid, or the like.

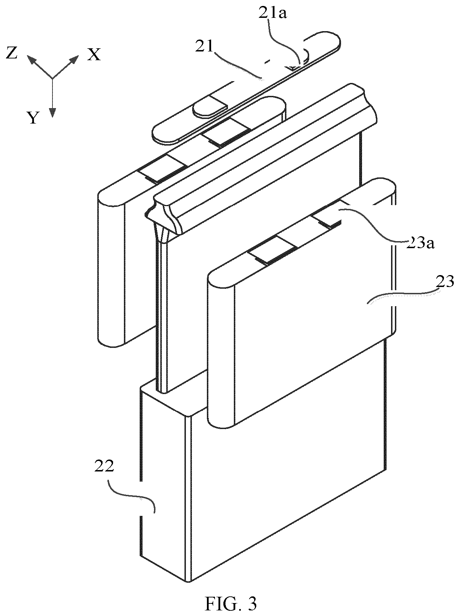

FIG. 3 is an exploded view of a structure of the battery cell 20 according to some embodiments of the present disclosure. The battery cell 20 is the smallest unit that makes up the battery. Referring to FIG. 3, the battery cell 20 includes an end cover 21, a housing 22, an electrode assembly 23, and other functional members.

The end cover 21 is a member that covers an opening of the housing 22 to isolate an internal environment of the battery cell 20 from an external environment. Without limitation, a shape of the end cover 21 may be adapted to a shape of the housing 22 to cooperate with the housing 22. In some embodiments, the end cover 21 may be made of a material having a certain degree of hardness and strength (e.g., an aluminum alloy). In this way, the end cover 21 is less likely to deform when subjected to a compression and a collision, enabling the battery cell 20 to have a higher structural strength and improved safety performance. Functional members such as an electrode terminal 21a may be disposed on the end cover 21. The electrode terminal 21a can be configured to be electrically connected to the electrode assembly 23 to output or input electric energy of the battery cell 20. In some embodiments, a pressure relief mechanism may further be disposed on the end cover 21.

The pressure relief mechanism is configured to release an internal pressure of the battery cell 20 when the internal pressure or a temperature of the battery cell 20 reaches a threshold. The end cover 21 may be made of a variety of materials, such as copper, iron, aluminum, stainless steel, aluminum alloy, and plastic. The embodiments of the present disclosure are not specifically limited to any of these examples. In some embodiments, an insulation member may also be disposed on an inner side of the end cover 21. The insulation member can be configured to isolate an electrical connection member in the housing 22 from the end cover 21, to reduce a short-circuit risk. For example, the insulation member may be made of plastic, rubber, or the like.

The housing 22 is an assembly cooperating with the end cover 21 to form the internal environment of the battery cell 20. The formed internal environment can accommodate the electrode assembly 23, the electrolyte, and other members. The housing 22 and the end cover 21 may be independent members. An opening may be formed on the housing 22. The internal environment of the battery cell 20 may be formed by covering the opening with the end cover 21. Without limitation, the end cover 21 and the housing 22 may also be integrally formed. In a further embodiment, a common connection surface may be formed with the end cover 21 and the housing 22 before other members are put into the housing. When an interior of the housing 22 is encapsulated, the end cover 21 is made to cover the housing 22. The housing 22 may be in various shapes and may have various dimensions, such as in a cuboid shape, in a cylinder shape, and in a hexagonal prism shape. In a further embodiment, the shape of the housing 22 may be determined based on a specific shape and dimension size of the electrode assembly 23. The housing 22 may be made of various materials, such as copper, iron, aluminum, stainless steel, aluminum alloy, and plastic. The embodiments of the present disclosure are not limited to any of these examples.

The electrode assembly 23 is a member, in the battery cell 100, where an electrochemical reaction occurs. One or more electrode assemblies 23 may be contained in the housing 22. The electrode assembly 23 is formed primarily by winding or laminating a positive plate and a negative plate. Typically, a separator is located between the positive plate and the negative plate. Portions of the positive plate and the negative plate that have active substances form a main body portion of a cell assembly. Portions of the positive plate and the negative plate that have no active substances each form a tab 23a. A positive electrode tab and a negative electrode tab may be both located at one end of the main body portion, or may be located at two ends of the main body portion, respectively. During charging and discharging of the battery, positive electrode active substances and negative electrode active substances react with the electrolyte. The tab 23a is connected to the electrode terminal to form a current circuit.

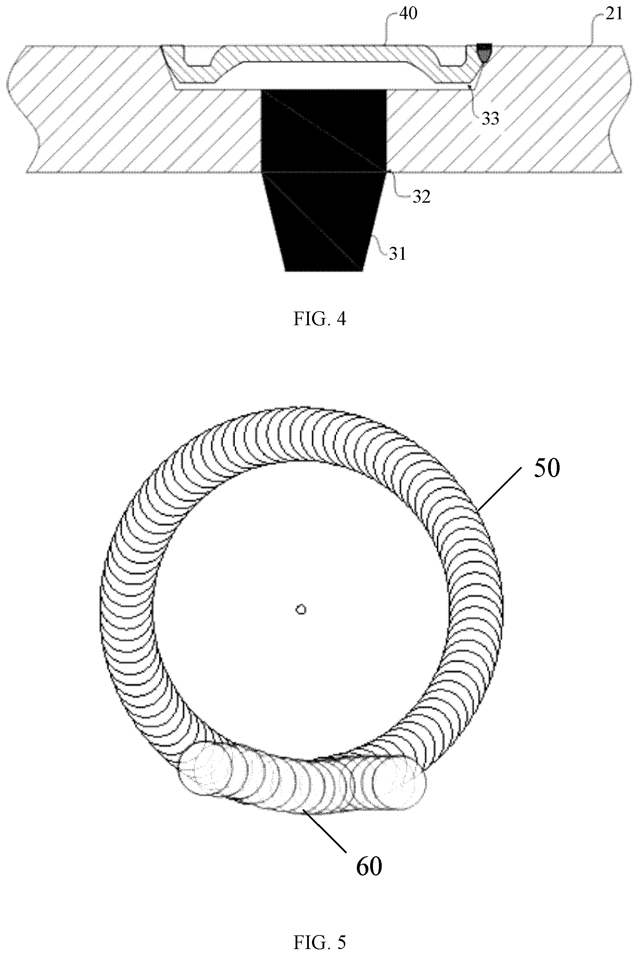

According to some embodiments of the present disclosure, referring to FIG. 4, the end cover 21 has a mounting surface for being mounted with a seal 40. An injection hole 32 is defined on the end cover 21. To facilitate sealing the injection hole 32, an accommodation groove 33 is recessed from the mounting surface of the end cover 21. The injection hole 32 is defined at a bottom of the accommodation groove 33 to enable an end of the injection hole 32 to be in communication with the accommodation groove 33 and another end of the injection hole 32 to penetrate the end cover 21 to an inner surface of the end cover 21. During mounting, an adhesive nail 31 is inserted into the injection hole 32 to seal the injection hole 32. The seal 40 is located in the accommodation groove 33. The accommodation groove 33 can limit a radial movement of the seal 40. The seal 40 is welded to the end cover 21.

Generally, a conventional seal 40 has a substantially truncated cone contour. As illustrated in FIG. 4, in a cross section parallel to an axial direction of the seal 40, an upper end of the adhesive nail 31 cooperates with a bottom surface of the seal 40. A side wall of the accommodation groove 33 is an oblique surface. An outer annular wall of the seal 40 cooperates with the side wall of the accommodation groove 33. In addition, an end of the outer annular wall of the seal 40 facing away from the adhesive nail 31 is attached to an inner wall of the accommodation groove 33, to fill the accommodation groove 33 with the seal 40. A top surface of the seal 40 is flush with a top surface of the end cover 21. Or the top surface of the seal 40 is slightly higher than the top surface of the end cover 21. A circular junction between the seal 40 and the end cover 21 is welded to weld and fix the seal 40 to the end cover 21.

As an example, a laser welding device is used as the welding assembly. When performing welding, the welding assembly emits high-energy laser light to a junction between the seal 40 and the end cover 21. Under an action of the high-energy laser light, a liquid metallic portion having a certain shape is formed at the junction between the seal 40 and the end cover 21. The liquid metallic portion is called a welding pool. During the welding, a weld seam is formed when a metallic material at a tail of the pool cools and crystallizes as the welding assembly moves.

When the conventional seal 40 is welded by a pulsed laser, the battery production capacity is limited due to a low welding speed of the pulsed laser. In addition, due to the low beat rate of the pulsed laser light, a large number of welding devices are needed, which leads to the poor consistency of penetration.

When the conventional seal 40 is welded by a continuous laser, a large amount of heat exists in the welding pool during a movement of the continuous laser along a predetermined trajectory. The electrolyte remaining in the injection hole 32 decomposes into gases under a high heat effect of a high-energy laser beam. When welding for the seal 40 is completed, a sealed cavity is formed between the seal 40 and an inner wall surface of the accommodation groove 33. The gases are trapped in the sealed cavity between the seal 40 and the accommodation groove 33, causing a high air pressure in the sealed cavity. The high-pressure gases easily form pores at both the head and the tail of the weld seam. Since the pores are in communication with the sealed cavity, the accommodation groove 33 cannot be completely sealed, which leads to product defects in the end cover 21. Therefore, a weld yield rate of the product fails to meet requirements.

To address the problems of the low welding speed and the low excellent rate in the conventional welding process for the seal, the present disclosure provides a battery cell. Referring to FIG. 4 and FIG. 5, in this example, the battery cell 20 includes: the end cover 21 having the injection hole 32 defined thereon; and the seal 40 sealingly connected to the injection hole 32. A first weld segment 50 and a second weld segment 60 are formed between the seal 40 and the end cover 21. An annular weld seam surrounding the seal 40 is formed by enclosing with at least a part of the first weld segment 50 and at least a part of the second weld segment 60 together. The first weld segment 50 is formed by continuous laser light. The second weld segment 60 is formed by pulsed laser light.

By welding the seal 40 of battery cell 20 in segments, the first weld segment 50 and the second weld segment 60 are formed between the seal 40 and the end cover 21. The annular weld seam surrounding the seal 40 is formed by enclosing with at least a part of the first weld segment 50 and at least a part of the second weld segment 60 together. The first weld segment 50 is formed by the continuous laser light. The second weld segment 60 is formed by the pulsed laser light. Therefore, the high welding rate of the continuous laser light and the high excellent rate of the pulsed laser light can be combined to avoid the problems of the low welding speed and the low excellent rate during the welding for the seal 40, contributing to improving the welding rate and the welding yield rate of the seal 40.

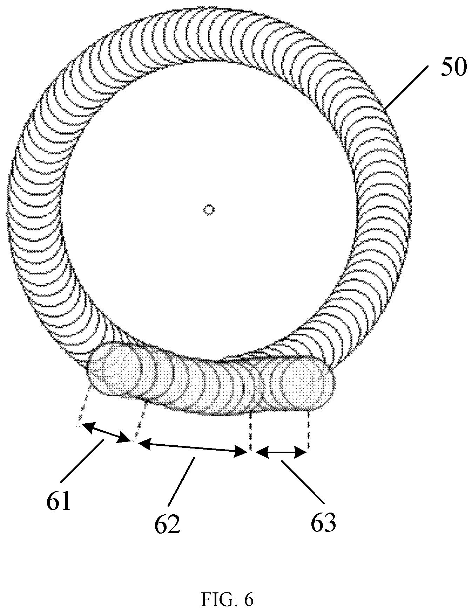

According to some embodiments of the present disclosure, referring to FIG. 6, the second weld segment 60 includes a head 61, a middle 62, and a tail 63 that are sequentially connected. The annular weld seam is formed by connecting the middle 62 to the first weld segment 50.

In this embodiment, the second weld segment 60 is divided, based on a sequence of formation time of the second weld segment 60, into the head 61, the middle 62, and the tail 63 that are sequentially connected.

Since laser light at the head 61 and the tail 63 is unstable and laser light at the middle 62 is stable during welding, the welding excellent rate can be improved through forming the annular weld seam by connecting the middle 62 of the second weld segment 60 to the first weld segment 50.

According to some embodiments of the present disclosure, referring to FIG. 6, the head 61 and the tail 63 are equal in length. Therefore, the head 61 and the tail 63 can be arranged symmetrically to embellish the annular weld seam.

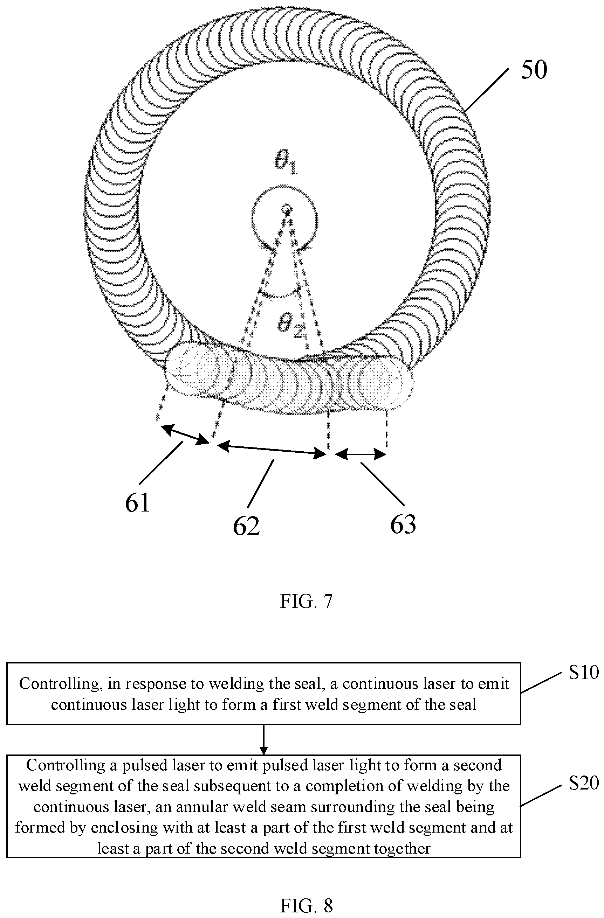

According to some embodiments of the present disclosure, referring to FIG. 7, the head 61 and/or the tail 63 partially overlaps the first weld segment 50.

In a further embodiment, an overlap angle may be determined based on a first welding angle $\theta_1$ corresponding to the first weld segment 50 and a second welding angle $\theta_2$ corresponding to the second weld segment 60. For example, when the first welding angle $\theta_1$ corresponding to the first weld segment 50 is 340° and the second welding angle $\theta_2$ corresponding to the second weld segment 60 is 40°, the overlap angle = 340° + 40° - 360° = 20°.

The first welding angle $\theta_1$ may range from 270° to 340°. The second welding angle $\theta_2$ may range from 40° to 90°. To ensure sealing performance of the seal 40 while achieving that the annular weld seam of the seal 40 is formed by enclosing with at least a part of the first weld segment 50 and at least a part of the second weld segment 60 together, the first weld segment 50 and the second weld segment 60 need to overlap by 10° or more. Accordingly, a sum of the first welding angle $\theta_1$ and the second welding angle $\theta_2$ is equal to or greater than 370°.

By setting the head 61 and/or the tail 63 of the second weld segment 60 to partially overlap the first weld segment 50, the sealing performance of the seal 40 can be improved.

According to some embodiments of the present disclosure, referring to FIG. 6, the middle 62 has a dimension equal to or greater than 1 mm.

By setting the dimension of the middle 62 of the second weld segment 60 to be equal to or greater than 1 mm, a sufficient region can be reserved for discharge of electrolyte vapors during the welding to avoid a formation of a defect in the finishing spot.

According to some embodiments of the present disclosure, referring to FIG. 5, a length of the first weld segment 50 in the annular weld seam is greater than a length of the second weld segment 60 in the annular weld seam.

By setting the length of the first weld segment 50 to be greater than the length of the second weld segment 60, continuous laser light welding can be ensured to be a primary welding method, and pulsed laser light welding can be ensured to be a secondary welding method. Since the continuous laser light welding has a higher welding rate, a welding rate for the seal can be increased.

According to some embodiments of the present disclosure, referring to FIG. 5, a spacing between weld joints of the first weld segment 50 is equal to a spacing between weld joints of the second weld segment 60.

The continuous laser light may be modulated continuous laser light. The modulated continuous laser light may be modulated into a pulsed mode to enable the continuous first weld segment 50 to form a dotted-weld joint appearance consistent with an appearance of the second weld segment 60 subsequently formed by the pulsed laser light. The pulsed laser light may be YAG pulsed laser light, which ensures a smooth and beautiful weld seam in the finishing spot.

To ensure that the dotted-weld joints are consistent in appearance, the spacing between the weld joints of the first weld segment 50 needs to be set equal to the spacing between the weld joints of the second weld segment 60. That is, the continuous laser emitting the continuous laser light is set to be exactly the same as the pulsed laser emitting the pulsed laser light in stepping,

i.e., $\dfrac{v_1}{H_1} = \dfrac{v_2}{H_2}$ , where $v_1$ represents a welding speed of the continuous laser, $H_1$ represents a welding frequency of the continuous laser, $v_2$ represents a welding speed of the pulsed laser, and $H_2$ represents a welding frequency of the pulsed laser.

To ensure that the first weld segment 50 partially overlaps the second weld segment 60, the stepping of each of the continuous laser and the pulsed laser also needs to be equal to or smaller than a predetermined

stepping. That is, $\dfrac{v_1}{H_1} = \dfrac{v_2}{H_2} \leq$ predetermined stepping, where the predetermined stepping may be pre-set.

By setting the spacing between the weld joints of the first weld segment 50 to be equal to the spacing between the weld joints of the second weld segment 60, a uniform appearance of the annular weld seam can be ensured.

According to some embodiments of the present disclosure, referring to FIG. 5, a diameter of each of weld joints of the first weld segment 50 is equal to a diameter of each of weld joints of the second weld segment 60.

To ensure that a width of the first weld segment 50 is consistent with a width of the second weld segment 60, in this embodiment, single point energy emitted by the continuous laser needs to be set to be the same as single point energy emitted by the pulsed laser. That is, $P_1 * J_1 = P_2 * J_2$, where $P_1$ represents peak power of the continuous laser, $J_1$ represents a pulse width corresponding to the peak power of the continuous laser, $P_2$ represents peak power of the pulsed laser, and $J_2$ represents a pulse width corresponding to the peak power of the pulsed laser.

According to some embodiments of the present disclosure, reference can be made to FIG. 8. FIG. 8 is a flowchart illustrating a welding method according to some embodiments of the present disclosure.

In this embodiment, the welding method is used for welding the seal 40 to a material. The method includes operations at blocks.

At block S10, the continuous laser is controlled, in response to welding the seal 40, to emit the continuous laser light to form the first weld segment 50 of the seal 40.

According to some embodiments of the present disclosure, in response to controlling the continuous laser to emit the continuous laser light to form the first weld segment 50 of the seal 40, the pulsed laser is controlled simultaneously to emit the pulsed laser light to form the second weld segment 60 of an immediately previous seal 40.

Since the pulsed laser can be simultaneously controlled, in response to controlling the continuous laser to emit the continuous laser light to form the first weld segment 50 of the seal 40, to emit the pulsed laser light to form the second weld segment 60 of the immediately previous seal 40, a welding speed can be increased.

According to some embodiments of the present disclosure, a welding duration for the continuous laser to weld the first weld segment of the seal is equal to a welding duration for the pulsed laser to weld the second weld segment of the immediately previous seal.

The pulsed laser is simultaneously controlled, in response to controlling the continuous laser to emit the continuous laser light to form the first weld segment 50 of the seal 40, to emit the pulsed laser light to form the second weld segment 60 of the immediately previous seal 40. Therefore, to avoid material stacking during the welding, in this embodiment, it is further necessary to ensure that the welding duration for the continuous laser to weld the first weld segment 50 of the seal 40 is equal to the welding duration for the pulsed laser to weld the second weld segment 60 of the immediately previous seal 40. That is, $t_1 + \theta_1 * R / v_1 = t_2 + \theta_2 * R / v_2$. In the equation, $t_1$ represents a sum of an acceleration duration of the continuous laser and a deceleration duration of the continuous laser. The acceleration duration is time taken to accelerate the welding speed of the continuous laser from zero to a stable welding speed corresponding to the continuous laser. The deceleration duration is time taken to decelerate the welding speed of the continuous laser from the stable welding speed corresponding to the continuous laser to zero. The stable welding speed is a speed at which the laser emits laser light to start welding stably. For example, the continuous laser corresponds to the stable welding speed of 80 mm/s. $\theta_1$ represents the first welding angle corresponding to the first weld segment 50. $R$ represents a radius of a welding trajectory of the seal 40. $v_1$ represents the welding speed of the continuous laser. $t_2$ represents a sum of an acceleration duration and a deceleration duration of the pulsed laser. The acceleration duration is time taken to accelerate the welding speed of the pulsed laser from zero to a stable welding speed corresponding to the pulsed laser. The deceleration duration is time taken to decelerate the welding speed of the continuous laser from the stable welding speed corresponding to the pulsed laser to zero. The pulsed laser corresponds to the stable welding speed of 7 mm/s. $\theta_2$ represents the second welding angle corresponding to the second weld segment 60. $v_2$ represents the welding speed of the pulsed laser.

$$\theta_1 + \theta_2 > 2\pi .$$

At block S20, the pulsed laser is controlled to emit the pulsed laser light to form the second weld segment 60 of the seal 40 subsequent to a completion of welding by the continuous laser. The annular weld seam surrounding the seal 40 is formed by enclosing with at least a part of the first weld segment 50 and at least a part of the second weld segment 60 together.

This embodiment discloses that, during the welding for the seal 40, the continuous laser is controlled to emit the continuous laser light to form the first weld segment 50 of the seal 40. The pulsed laser is controlled to emit the pulsed laser light to form the second weld segment 60 of the seal 40 subsequent to the completion of the welding by the continuous laser. The annular weld seam surrounding the seal 40 is formed by enclosing with at least a part of the first weld segment 50 and at least a part of the second weld segment 60 together. In the embodiment, the seal 40 is welded in segments. The annular weld seam of the seal 40 is formed by enclosing with the first weld segment 50 and the second weld segment 60 together. The first weld segment 50 is formed by the continuous laser light emitted by the continuous laser. The second weld segment 60 is formed by the pulsed laser light emitted by the pulsed laser. Therefore, the high welding rate of the continuous laser light and the high excellent rate of the pulsed laser light can be combined to avoid the problems of the low welding speed and the low excellent rate during the welding for the seal 40, contributing to improving the welding rate and the welding yield rate of the seal 40.

According to some embodiments of the present disclosure, a length of an unwelded region between the seal 40 and the material is greater than or equal to 1 mm, subsequent to the completion of the welding by the continuous laser and prior to welding by the pulsed laser.

By setting the length of the unwelded region between the seal 40 and the material to be greater than or equal to 1 mm, the sufficient region can be reserved for the electrolyte vapors to be discharged, avoiding the formation of the defect in the finishing spot.

According to some embodiments of the present disclosure, after a predetermined time interval subsequent to the completion of the welding by the continuous laser, the pulsed laser is controlled to emit the pulsed laser light to form the second welded segment 60 of the seal 40.

By setting a time interval between the welding by the continuous laser and the welding by the pulsed laser, a sufficient duration can be reserved for the electrolyte vapors to be discharged, which avoids the formation of the defect in the finishing spot. The time interval may be pre-set.

According to some embodiments of the present disclosure, the continuous laser light is modulated continuous laser light, and the pulsed laser light is YAG pulsed laser light.

By setting the continuous laser light as the modulated continuous laser light, an electrolyte contamination tolerance can be increased due to a large spot formed by the modulated continuous laser light. Also, a spot-like appearance formed by the modulated continuous laser light has no difference from an appearance of a weld seam of the subsequent YAG pulsed laser light, which can ensure the uniform appearance of the annular weld seam. In addition, during high-speed welding of the modulated continuous laser light, a pore in the finishing spot is reserved to facilitate the discharge of the electrolyte vapors, avoiding the formation of the defect in the finishing spot. By setting the pulsed laser light as the YAG pulsed laser light, a smooth and beautiful weld seam in the finishing spot can be ensured.

According to some embodiments of the present disclosure, a ratio of a welding speed of the continuous laser to a welding frequency of the continuous laser is equal to a ratio of a welding speed of the pulsed laser to a welding frequency of the pulsed laser.

To ensure that the dotted-weld joints are consistent in appearance, the spacing between the weld joints of the first weld segment 50 needs to be set equal to the spacing between the weld joints of the second weld segment 60. That is, the continuous laser emitting the continuous laser light is set to be exactly the same as the pulsed laser emitting the pulsed laser light in stepping,

$$\frac{v_1}{H_1} = \frac{v_2}{H_2}$$

i.e., , where $v_1$ represents the welding speed of the continuous laser, $H_1$ represents the welding frequency of the continuous laser, $v_2$ represents the welding speed of the pulsed laser, and $H_2$ represents the welding frequency of the pulsed laser.

According to some embodiments of the present disclosure, single point energy emitted by the continuous laser is equal to single point energy emitted by the pulsed laser.

To ensure that the width of the first weld segment 50 is consistent with the width of the second weld segment 60, in this embodiment, the single point energy emitted by the continuous laser needs to be set to be the same as the single point energy emitted by the pulsed laser. That is, $P_1 * J_1 = P_2 * J_2$, where $P_1$ represents the peak power of the continuous laser, $J_1$ represents the pulse width corresponding to the peak power of the continuous laser, $P_2$ represents the peak power of the pulsed laser, and $J_2$ represents the pulse width corresponding to the peak power of the pulsed laser.

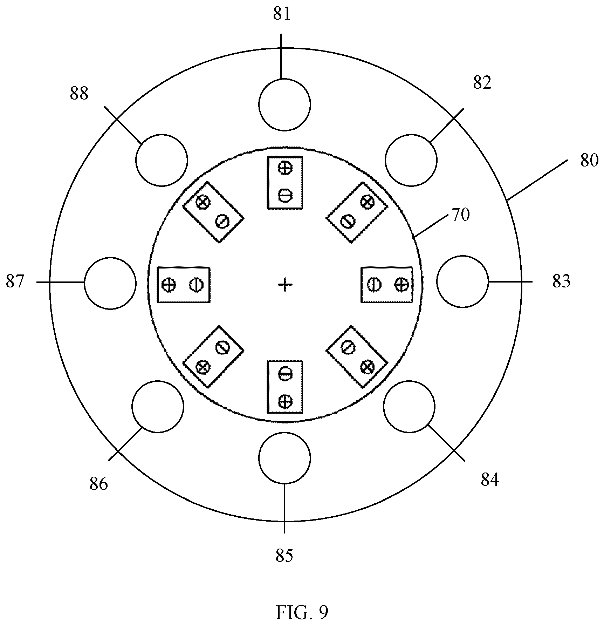

According to some embodiments of the present disclosure, reference can be made to FIG. 9. FIG. 9 is a schematic diagram of a welding device for a welding method according to some embodiments of the present disclosure.

In this embodiment, the welding device includes: a carrier table 70 configured to hold a seal 40 and a material; and a welding platform 80 disposed in correspondence to the carrier table 70. A continuous laser 86 and a pulsed laser 87 are disposed on the welding platform 80. The continuous laser 86 is configured to form the first weld segment 50 between the seal 40 and the material. The pulsed laser 87 is configured to form the second weld segment 60 between the seal 40 and the material. The annular weld seam surrounding the seal 40 is formed by enclosing with at least a part of the first weld segment 50 and at least a part of the second weld segment 60 together.

The welding platform 80 being disposed in correspondence to the carrier table 70 may mean that a position where the seal 40 and the material are placed on the carrier table 70 corresponds to a station of the welding platform 80.

Further, an unloading assembly 81, a loading assembly 82, a laser cleaning assembly 83, a nailing assembly 84, a pre-welding assembly 85, and a CCD inspection assembly 88 may be disposed on the welding platform 80.

During the welding for the seal 40, the continuous laser 86 starts to weld the first weld segment 50 of the seal 40 of an N-th cell subsequent to loading/laser cleaning/nailing performed on the cell, and at this time the pulsed laser 87 at a next station simultaneously welds the second weld segment 60 of the seal 40 of an (N-1)-th cell. By setting the welding angle and the welding speed, the beat rates can be equalized (i.e., the welding duration of the continuous laser 86 is equal to the welding duration of the pulsed laser 87). That is, $t_1 + \theta_1 * R / v_1 = t_2 + \theta_2 * R / v_2$. In the equation, $t_1$ represents the sum of the acceleration duration of the continuous laser and the deceleration duration of the continuous laser. The acceleration duration is the time taken to accelerate the welding speed of the continuous laser from zero to the stable welding speed corresponding to the continuous laser. The deceleration duration is the time taken to decelerate the welding speed of the continuous laser from the stable welding speed corresponding to the continuous laser to zero. The stable welding speed is the speed at which the laser emits the laser light to start welding stably. For example, the continuous laser corresponds to the stable welding speed of 80 mm/s. $\theta_1$ represents the first welding angle corresponding to the first weld segment 50. R represents the radius of the welding trajectory of the seal 40. $v_1$ represents the welding speed of the continuous laser. $t_2$ represents the sum of the acceleration duration and the deceleration duration of the pulsed laser. The acceleration duration is time taken to accelerate the welding speed of the pulsed laser from zero to the stable welding speed corresponding to the pulsed laser. The deceleration duration is the time taken to decelerate the welding speed of the continuous laser from the stable welding speed corresponding to the pulsed laser to zero. The pulsed laser corresponds to the stable welding speed of 7 mm/s. $\theta_2$ represents the second welding angle corresponding to the second weld segment 60. $v_2$ represents the welding speed of the pulsed laser. $\theta_1 + \theta_2 > 2\pi$.

When the continuous laser 86 starts to weld the first weld segment 50 of the seal 40 of a 1-st cell, since there is no seal 40 on the carrier table 70 corresponding to the pulsed laser 87 at a next station, it is necessary to control the pulsed laser 87 to remain motionless to avoid damages to the pulsed laser 87, protecting the device. When the pulsed laser 87 starts to weld the second weld segment 60 of the seal 40 of a last cell, since there is no seal 40 on the carrier table 70 corresponding to the continuous laser 86 at an immediately previous station, it is necessary to control the continuous laser 86 to remain motionless to avoid damages to the continuous laser 86, protecting the device.

The continuous laser 86 and the pulsed laser 87 are disposed on the welding platform 80. The continuous laser 86 is configured to form the first weld segment 50 between the seal 40 and the material. The pulsed laser 87 is configured to form the second weld segment 60 between the seal 40 and the material. The annular weld seam of the seal 40 is formed by enclosing with at least a part of the first weld segment 50 and at least a part of the second weld segment 60 together. Therefore, the high welding rate of the continuous laser light and the high excellent rate of the pulsed laser light can be combined to avoid the problems of the low welding speed and the low excellent rate during the welding for the seal 40, contributing to improving the welding rate and the welding yield rate of the seal 40.

According to some embodiments of the present disclosure, the carrier table 70 is rotatable and is configured to switch between the continuous laser 86 and the pulsed laser 87 for the seal 40 and the material.

The carrier table 70 is rotated subsequent to a completion of welding, by the continuous laser 86, the first weld segment 50 of the seal 40 of the N-th cell, to align the seal 40 of the N-th cell with the station of the pulsed laser 87. The pulsed laser 87 proceeds to weld the second weld segment 60 of the seal 40 of the N-th cell. A duration during which the carrier table 70 rotates allows for the residual electrolyte vapors in the seal 40 to be discharged, avoiding the defect of forming pores in the finishing spot.

Finally, it should be noted that each of the above embodiments is used only to illustrate, rather than to limit, the technical solutions of the present disclosure. Although the present disclosure has been described in detail with reference to the foregoing embodiments, it is conceivable for those skilled in the art that modifications can be made to the technical solutions described in the foregoing embodiments, or equivalent replacements can be made to some or all of the technical features in the technical solutions described in the foregoing embodiments. These modifications or equivalent replacements, which do not depart the essence of corresponding technical solutions from the scope of the technical solutions of the embodiments of the present disclosure, shall fall within the scope of the claims and the specification of the present disclosure. In particular, the technical features mentioned in individual embodiments can be combined arbitrarily without any structural conflict. The present disclosure is not limited to the particular embodiments disclosed herein, and includes all technical solutions falling within the scope of the claims.

**Claims**

1. A battery cell, comprising:

    an end cover having an injection hole defined thereon; and
    a seal sealingly connected to the injection hole, wherein a first weld segment and a second weld segment are formed between the seal and the end cover, and an annular weld seam surrounding the seal is formed by enclosing with at least a part of the first weld segment and at least a part of the second weld segment together, the first weld segment being formed by continuous laser light, and the second weld segment being formed by pulsed laser light.

2. The battery cell according to claim 1, wherein the second weld segment comprises a head, a middle, and a tail that are sequentially connected, the annular weld seam being formed by connecting the middle to the first weld segment.

3. The battery cell according to claim 2, wherein the head and the tail are equal in length.

4. The battery cell according to claim 2 or 3, wherein the head and/or the tail partially overlaps the first weld segment.

5. The battery cell according to any one of claims 2 to 4, wherein the middle has a dimension equal to or greater than 1 mm.

6. The battery cell according to any one of claims 1 to 5, wherein a length of the first weld segment in the annular weld seam is greater than a length of the second weld segment in the annular weld seam.

7. The battery cell according to any one of claims 1 to 6, wherein a spacing between weld joints of the first weld segment is equal to a spacing between weld joints of the second weld segment.

8. The battery cell according to any one of claims 1 to 7, wherein a diameter of each of weld joints of the first weld segment is equal to a diameter of each of weld joints of the second weld segment.

9. A battery, comprising the battery cell according to any one of claims 1 to 8.

10. An electric apparatus, comprising the battery according to claim 9, the battery being configured to supply electric energy.

11. A welding method for welding a seal to a material, the method comprising:

    controlling, in response to welding the seal, a continuous laser to emit continuous laser light to form a first weld segment of the seal; and controlling a pulsed laser to emit pulsed laser light to form a second weld segment of the seal subsequent to a completion of welding by the continuous laser, an annular weld seam surrounding the seal being formed by enclosing with at least a part of the first weld segment and at least a part of the second weld segment together.

12. The welding method according to claim 11, further comprising:
    in response to controlling the continuous laser to emit the continuous laser light to form the first weld segment of the seal, simultaneously controlling the pulsed laser to emit the pulsed laser light to form the second weld segment of an immediately previous seal.

13. The welding method according to claim 12, wherein a welding duration for the continuous laser to weld the first weld segment of the seal is equal to a welding duration for the pulsed laser to weld the second weld segment of the immediately previous seal.

14. The welding method according to any one of claims 11 to 13, wherein a length of an unwelded region between the seal and the material is greater than or equal to 1 mm, subsequent to the completion of the welding by the continuous laser and prior to welding by the pulsed laser.

15. The welding method according to any one of claims 11 to 14, wherein said controlling the pulsed laser to emit the pulsed laser light to form the second weld segment of the seal subsequent to the completion of the welding by the continuous laser comprises:
    controlling, after a predetermined time interval subsequent to the completion of the welding by the continuous laser, the pulsed laser to emit the pulsed laser light to form the second welded segment of the seal.

16. The welding method according to any one of claims 11 to 15, wherein the continuous laser light is modulated continuous laser light, and the pulsed laser light is YAG pulsed laser light.

17. The welding method according to any one of claims 11 to 16, wherein a ratio of a welding speed of the continuous laser to a welding frequency of the continuous laser is equal to a ratio of a welding speed of the pulsed laser to a welding frequency of the pulsed laser.

18. The welding method according to any one of claims 11 to 17, wherein single point energy emitted by the continuous laser is equal to single point energy emitted by the pulsed laser.

19. A welding device, comprising:

a carrier table configured to hold a seal and a material; and
a welding platform disposed in correspondence to the carrier table, wherein a continuous laser and a pulsed laser are disposed on the welding platform, the continuous laser being configured to form a first weld segment between the seal and the material, the pulsed laser being configured to form a second weld segment between the seal and the material, and an annular weld seam surrounding the seal being formed by enclosing with at least a part of the first weld segment and at least a part of the second weld segment together.

20. The welding device according to claim 19, wherein the carrier table is rotatable and is configured to switch between the continuous laser and the pulsed laser for the seal and the material.

FIG. 1

FIG. 2

FIG. 3

FIG. 4

FIG. 5

FIG. 6

$\theta_1$

$\theta_2$

50

61

62

63

FIG. 7

| Controlling, in response to welding the seal, a continuous laser to emit continuous laser light to form a first weld segment of the seal | S10 |
|---|---|
| Controlling a pulsed laser to emit pulsed laser light to form a second weld segment of the seal subsequent to a completion of welding by the continuous laser, an annular weld seam surrounding the seal being formed by enclosing with at least a part of the first weld segment and at least a part of the second weld segment together | S20 |

FIG. 8

FIG. 9

# EP 4 572 002 A1

## INTERNATIONAL SEARCH REPORT

| | International application No. |
|---|---|
| | **PCT/CN2022/127138** |

| A. | CLASSIFICATION OF SUBJECT MATTER |
|---|---|
| | H01M50/636(2021.01)i; H01M50/645(2021.01)i; B23K26/21(2014.01)i |

According to International Patent Classification (IPC) or to both national classification and IPC

| B. | FIELDS SEARCHED |
|---|---|

Minimum documentation searched (classification system followed by classification symbols)

    IPC:H01M、B23K

Documentation searched other than minimum documentation to the extent that such documents are included in the fields searched

Electronic data base consulted during the international search (name of data base and, where practicable, search terms used)

    CNABS; CNTXT; DWPI; VEN; ENTXT; CNKI: 电池, 盖, 注液孔, 焊接, 连续激光, 脉冲激光, battery, lid, injection hole, weld, continuous-wave laser, pluse laser

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114074220 A (HAN'S LASER TECHNOLOGY INDUSTRY GROUP CO., LTD.) 22 February 2022 (2022-02-22) <br> description, paragraphs 3-42, and figures 1-5 | 1-20 |
| X | CN 217214996 U (CHANGZHOU WEIZHOU ELECTRONIC TECHNOLOGY CO., LTD.) 16 August 2022 (2022-08-16) <br> description, paragraphs 2-41, and figures 1-3 | 1-20 |
| A | CN 107335914 A (HAN'S LASER TECHNOLOGY INDUSTRY GROUP CO., LTD.) 10 November 2017 (2017-11-10) <br> entire document | 1-20 |
| A | JP 2013240801 A (MIYACHI TECHNOS K. K.) 05 December 2013 (2013-12-05) <br> entire document | 1-20 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 July 2023** | **11 July 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

20

## INTERNATIONAL SEARCH REPORT
### Information on patent family members

International application No.

**PCT/CN2022/127138**

| Patent document cited in search report | | | Publication date (day/month/year) | Patent family member(s) | | | Publication date (day/month/year) |
|---|---|---|---|---|---|---|---|
| CN | 114074220 | A | 22 February 2022 | None | | | |
| CN | 217214996 | U | 16 August 2022 | None | | | |
| CN | 107335914 | A | 10 November 2017 | CN | 107335914 | B | 10 May 2019 |
| JP | 2013240801 | A | 05 December 2013 | JP | 6091084 | B2 | 08 March 2017 |

Form PCT/ISA/210 (patent family annex) (July 2022)